# EUROPEAN PATENT APPLICATION

(11) **EP 2 620 419 A1**
(43) Date of publication of application: **31.07.2013**
(21) Application number: 12152797.2
(22) Date of filing: 27.01.2012
(51) Int. Cl.: C03C 25/32, C03C 25/40

(54) **Polyamide based sizing composition for glass fibres**

(71) Applicant: 3B Fibreglass, 4651 Battice (BE)
(72) Inventor: Van Hoof, Frédéric, 4651 Battice (BE); Masson, Nadia, 4651 Battice (BE); Delvaux, Sophie, 4651 Battice (BE)
(74) Representative: BiiP cvba

(57) **Abstract**

The present invention concerns an aqueous sizing composition for glass fibres comprising:
(a) A silane based coupling agent,
(b) one or more film formers,

Characterized in that, said one or more film formers comprise a polyamide based film former. This sizing is particularly suitable for enhancing the resistance to hydrolysis of glass fibre reinforced composites comprising a polyamide matrix, in particular a partly aromatic polyamide such as PPA.

## Description

### Technical Field

The present invention relates to the field of glass fibre reinforced composites and, in particular, of silane based sizings for glass fibres enhancing the mechanical properties of polymeric composites reinforced with glass fibres coated with such sizing measured both dry as moulded (DAM) and after ageing in moist conditions. The sizing composition of the present invention is suitable for reinforcing various types of polymeric matrices, most particularly polyamides.

### Background for the invention

Polymeric materials have many attractive properties, but their mechanical properties are insufficient for many structural applications. Fibre reinforced composites, wherein approximately 6 to 25 µm diameter fibres having high stiffness and/or strength, typically carbon, glass or aramide fibres, are embedded in a polymeric matrix have substantially higher mechanical properties allowing to reach very advantageous mechanical properties to density ratios. The reinforcing fibres may be short, long or continuous. When the mechanical properties of continuous fibre reinforced composites can be very high, the geometry of parts made of such composites is limited mostly to thin surfaces (which can be hollow like tennis rackets). On the other hand, while the mechanical properties of short fibre reinforced composites are lower than the former, there is no limit to the geometry of parts manufactured therewith, as they can be produced by extrusion or injection moulding.

When a fibre reinforced composite is submitted to a stress field, the stress is transferred from the matrix to the fibres through the matrix-fibre interface. If the latter is strong, the whole load is transferred to the fibre and the mechanical properties are high. If, on the other hand, the interfacial bond between matrix and fibres is low, a crack may initiate at and propagate along the fibre-matrix interface resulting in a premature failure of the composite. It is therefore very important to enhance the bond between matrix and fibres. The mechanical properties of short fibre reinforced composites are particularly sensitive to the interfacial strength between polymer matrix and fibres, because of the short size of the latter.

In order to allow handling of the fibres and to enhance interfacial adhesion with the matrix they are embedded in, the fibres are coated with a sizing which composition depends on the nature of the reinforcing fibre to be sized and on the matrix the fibres are to be used with. Glass fibres are usually sized with a silane based composition since Si-O-Si covalent bonds can be formed between, on the one hand, the glass fibre surface and silanols obtained by hydrolysing of the alkoxysilanes of the sizing and, on the other hand, between adjacent silanol groups, thus forming a crosslinked structure at the surface of the glass fibres. This crosslinked structure seems to enhance the fibre resistance to corrosion, typically to hydrolysis. Adhesion of the sizing with the matrix can be enhanced by the organic function of the silane coupling agent and by a film former, which nature depends on the matrix used. Sizing compositions usually comprise other additives such as a lubricant, antistatic agents, and the like. Numerous sizing compositions for glass fibres have been proposed in the art, as e.g., in JP2006016559, JP2006016558, JP2006016557, WO2004110948, US5877240, WO9818734, US444891 0, WO200149627, WO200048957, WO200836224, US20070154697, WO200767667, US20070072989, WO200431246, WO200356095, WO200353875, US20060083922, WO200288044, W0200026155, WO9855415, WO9742129, CA2127015, EP-635462, US5389440, and are reviewed in E.P. Pluedemann, "Silane Coupling Agents", Plenium Press (1982*).* Sizing compositions can be applied

Sizing compositions can be applied to the fibre surface at a single coating station or, can be formulated as a precursor-binder two-part composition to be applied at two coating stations. The latter technique is necessary when the sizing compositions comprise components which are reactive with one another. A sizing composition is usually applied to the fibres surface as they are drawn out of a bushing, for example with a roller. The thus coated fibres are either wound onto a spool or chopped. For two-part compositions, the second component is generally sprayed onto the chopped fibres to form sized glass fibre pellets. A thermal treatment is then applied to the fibres to evaporate water and to react the components of the sizing composition with the glass fibre surface and with one another.

Continuous sized fibres are generally transformed into a fabric, either UD, woven, braided, knitted or the like before embedding them into a polymeric matrix. Several techniques exist for embedding glass fibres into a polymeric matrix. Thermoplastic polymers are easier to blend with chopped fibre pellets than with continuous fibre fabrics. Sized fibre pellets can advantageously be blended with a thermoplastic polymer in the screw of an extruder, wherein the fibre pellets are disrupted and the length of the fibres further decreased while they are homogenously mixed with the polymer; An extruded profile, generally in the shape of a wire, is chopped to form composite pellets of the polymer loaded with short glass fibres. Said composite pellets can be melted and shaped into a final part by injection moulding or extrusion.

Resistance to hydrolysis is a major concern for glass fibre reinforced composites, which can lose over 50% of their mechanical properties when exposed to hydrolysis conditions. The sizing composition of the glass fibres may contribute to increasing the resistance to hydrolysis, although how a sizing composition should be formulated to achieve this goal is not quite clear and may vary depending on the matrix used.

The present invention proposes sizing compositions for glass fibres which yield hign mechanical properties measured both dry as moulded (DAM) and after ageing in moist conditions and/or exposed to ethylene glycol. The sizing is particularly effective with polyamide matrices. This and other advantages of the present invention are presented in the following.

### Summary of the invention

The present invention is defined in the appended independent claims. Preferred embodiments are defined in the dependent claims. In particular, the present invention concerns an aqueous sizing composition for glass fibres comprising:
(a) A silane based coupling agent,
(b) one or more film formers,

Characterized in that, said one or more film formers comprise a polyamide based film former.

The dry sizing composition of the present invention preferably has a weight loss at 350°C of not more than 10%, measured by TGA in nitrogen. This allows the use of high melting temperature polymeric matrices without degrading the coupling properties of the sizing. The sizing composition is preferably so formulated as to develop an initial contact angle with ethylene glycol comprised between 20° and 70°, preferably 40° and 60°. IT was found that sizing compositions according to this invention developing a contact angle in such ranges yielded good wetting and adhesion properties with several thermoplastic polymers and, in particular with polyamides.

The polyamide film former is preferably present in the dry sizing (i.e., without water) in an amount comprised between 20 and 95 wt.%, preferably, between 50 and 90 wt.%. The film former may be exclusively composed of polyamide. Alternatively, the film former may be formed of at least 75 wt.% of polyamide, preferably at least 80 wt.%, more preferably at least 90 wt.% polyamide, and wherein the film former may further comprise one or more of a:
- (i): Epoxy resin emulsion, preferably based on any of epoxy bisphenol A or epoxy bisphenol F,
- (ii): Epoxy ester resin,
- (iii): Epoxy urethane resin,
- (iv): Polyurethane, and/or
- (v): (Meth-)acrylate polymer or co-polymer.

The silane based coupling agent is preferably present in amount of 2 to 40 wt.% of total weight of sizing without water, preferably from 2 to 15 wt.%, and preferably comprises one or a mixture of a:
- **aminotrialkoxysilane**, such as γ-aminopropyltriethoxysilane, γ-aminopropyltrimethoxysilane, N- β-(Aminoethyl)- γ-aminopropyltrimethoxysilane, N- β-(Aminoethyl)- γ-aminopropyltriethoxysilane, diethylenetriaminopropyltrimethoxysilane, Bis-(γ-trimethoxysilylpropyl) amine, N-phenyl- γ-aminopropyltrimethoxysilane, γ-amino-3,3-dimethylbutyltrimethoxysilane, γ-aminobutyltriethoxysilane, polyazamide silane,
- **aminodialkoxysilane**, such as γ-aminopropylmethyldiethoxysilane, N-β-(Aminoethyl)-γ-aminopropylmethyldimethoxysilane, N-β-(Aminoethyl)-γ-aminopropyl-methyldimethoxysilane, N-β-(Aminoethyl)- γ-aminoisobutylmethyldimethoxy-silane, γ-aminopropylmethyldimethoxysilane, N-β-(Aminoethyl)- γ-aminopropyl-methyldiethoxysilane, and/or
- **Epoxy- trialkoxysilane**, such as β-(3,4-epoxycyclohexy)ethyltrimethoxysilane, γ-glycidoxypropyltrimethoxysilane, γ-glycidoxypropyltriethoxysilane, γ-glycidoxypropyltriethoxysilane, β-(3,4-epoxycyclohexyl)ethyltriethoxy-silane, β-(3,4-epoxycyclohexyl)ethyltrimethoxysilane,5, 6-epoxyhexyl-triethoxysilane.

The sizing of the present invention may also comprise additives selected from one or more of:
- pH adjusters, such as bases, preferably ammonia or sodium hydroxide, or acids, preferably acetic acid or phosphoric acid,
- a non-ionic lubricant, preferably a fatty alcohols ethoxylated or fatty acid monoester of polyethylene glycol, such as PEG 200 Monolaurate, PEG 600 Monooleate, PEG 600 Monostearate, PEG 400 Monostearate PEG 400 Monooleate, PEG 600 Monolaurate, the non-ionic lubricant being preferably present in an amount of 0 to 30 wt.% solids, more preferably from 2 to 25 wt.% solids, most preferably from 10 to 15 wt.% solids;
- a cationic lubricant, such as a polyethyleneimine polyamide salt, and is preferably present in the size composition in an amount from 0 to 30 wt.% solids, more preferably from 2 to 25 wt.% solids, most preferably from 10 to 15 wt.% solids,

- an antistatic agent, such as a quaternary ammonium, a tetraethylammonium chloride, or lithium chloride, which is preferably present in an amount of 0 to 5 wt.% solids, preferably from 0.5 to 1.5 wt.% solids.
- anti-foaming agents, such as polysiloxane derivatives, the anti-foaming agent being preferably present in amount of less than 0.1% of total weight of sizing without water,
- an isocyanate based cross-linker, such as an isocyanurate, biuret, carbodiimide, the isocyanate based cross-linker being preferably present in amount of 0 to 50% of total weight of sizing without water;
- a boron-containing compound selected from the group consisting of boric acid, boron oxide, sodium tetraborate, potassium metaborate, potassium tetraborate, ammonium biborate, ammonium tetrafluoroborate, butylammonium tetrafluoroborate, calcium tetrafluoroborate, lithium fluoroborate, potassium tetrafluoroborate, sodium tetrafluoroborate, tetrabutylammonium tetrafluoroborate, tetraethylammonium tetrafluoroborate and zinc tetrafluoroborate;
- a hypophosphite containing compound such as a hypophosphite salt or phosphite containing compound such as: sodium hypophosphite, ammonium hypophosphite, calcium hypophosphites, trisnonylphenyl phosphite.

The sizing composition of the present invention advantageously further comprises one or more multifunctional reactive polymers, preferably selected from one or more of:
- Epoxy phenol novolac (EPN),
- Epoxy cresol novolac (ECN),
- (Co-)polymer comprising acrylic and/or methacrylic acid groups,
- Copolymer of maleic acid,
- (Co-)polymer grafted with maleic anhydride.

The multifunctional reactive polymer(s) are preferably present in an amount of 0 to 70 wt.% of the total weight of sizing without water more preferably from 20 wt. to 40 wt..

The present invention further concerns a glass fibre at least partially coated with the reaction product of a sizing composition as discussed above. Such fibres are advantageously used in a fibre reinforced composite comprising a polymeric matrix, which is preferably a thermoplastic polymer such as a polyamide, such as PA6, PA4.6, PA6.6, PA6.10, PA6.12, PA10, PA12. Preferably the matrix is partly aromatic polyamide, such as a polyphthalamide (PPA). The composite material may be in the form of pellets of thermoplastic polymer reinforced with short, chopped glass fibres according to the present invention. Such composite pellets may be further processed by injection moulding or extrusion to manufacture short fibre reinforced composite parts.

The sizing composition of the present invention may be applied to the surface of glass fibres with the following steps:
(a) Drawing a bundle of glass fibres out of a bushing,
(b) Applying a sizing composition according to any of claims 1 to 7 to the surface of said fibres, and
(c) Applying a thermal treatment to the thus coated fibres for reacting the sizing composition with the surface of the glass fibres.

In a preferred embodiment, the sizing composition is applied in a single application station, preferably comprising a roller. Depending on the additives and reactive polymers used, however, some components of the sizing composition may alternatively be applied in a first application step with a roller, and a the remaining components applied in a second application step, such as for example by spraying after chopping the fibres.

A sizing according to the present invention enhances the mechanical properties measured dry as moulded (DAM) or measured after ageing in moist conditions (i.e., conditions promoting hydrolysis). They are therefore advantageously used in applications such as:
- Under the hood parts in an automotive vehicle,
- Semi-structural and structural parts in an automotive vehicle,
- Parts of equipment to be used in contact with food and water.
- Electric and electronic parts such as connectors, LED connections, ...
- Parts to be used in sports, leisure and appliances,
- Engineering parts such as gears and bearings.

### Brief description of the Figures

For a fuller understanding of the nature of the present invention, reference is made to the following detailed description taken in conjunction with the accompanying drawings in which:
**Figure 1**: shows a graphical representation of the un-notched Charpy results of 50 wt.% GF-PPA composites dry as moulded (DAM) and after ageing in hydrolysing conditions with GF sized with prior art sizing compositionS and GF according to the present invention.
**Figure 2**: shows a graphical representation of the results of (a) the tensile strength, (b) tensile modulus, and (c) tensile strain at failure of 50 wt.% GF-PPA composites dry as moulded (DAM) and after ageing in moist conditions (hydrolysis) with GF sized with prior art sizing compositionS and GF according to the present invention.
**Figure 3****:** shows a graphical representation of the residual mechanical properties of 50 wt.% GF-PPA composites after hydrolysis with GF sized with prior art sizing compositionS and GF according to the present invention.

### Detailed description of the invention

The glass fibre sizing of the present invention is particularly suitable for being used with polyamide matrices, in particular partly aromatic polyamides, such as polyphthalamides (PPA). The sizing of the present invention comprises a silane coupling agent which, once hydrolysed, is capable of reacting with the surface of the glass fibres to form Si-O-Si covalent bonds. The sizing of the present invention also comprises at least one film former. A film former interacts with both the silane coupling agent and the matrix upon impregnation of the fibres. The film former must therefore be compatible with the matrix to be used. A film former protects the glass fibre from damage during processing (e.g., weaving, knitting, braiding, etc.) and promotes compatibility of the fibres with the matrix. It is not necessary that the film former forms any -or at least not extensive- covalent bonds with the silane coupling agent. It is actually even desirable to find film former molecules diluted in the matrix, as this is a sign of excellent compatibility between the two. The sizing of the present invention is characterized by the presence of a polyamide film former which unexpectedly enhances substantially the resistance to hydrolysis of a composite reinforced with glass fibres coated with said sizing. Fibre reinforced composites are very sensitive to hydrolysis, and the mechanical properties of a composite exposed to hydrolysis conditions may drop by over 60% or more compared with the same properties measured dry as moulded (DAM). This substantial drop in mechanical properties upon exposure to hydrolysis conditions represents a major drawback of fibre reinforced composites. In many applications, such as outdoor applications in moist environments, or high temperature under the hood applications, the parts must be dimensioned taking account of these losses in mechanical properties, thus often becoming financially and technically (heavier) less competitive than alternative materials such as metals.

For example, polyphthalamide (PPA) is a thermoplastic synthetic resin of the polyamide family that is used e.g., to replace metals in high temperature automotive applications, such as under the hood parts in automotive industry. Due to the high temperatures of the engine and the wet outdoor environment such parts are particularly sensitive to properties drop due to hydrolysis. Tests were carried out on 50 wt.% glass fibre reinforced PPA samples to assess the resistance to hydrolysis of composites reinforced with glass fibres according to the present invention compared with the prior art.

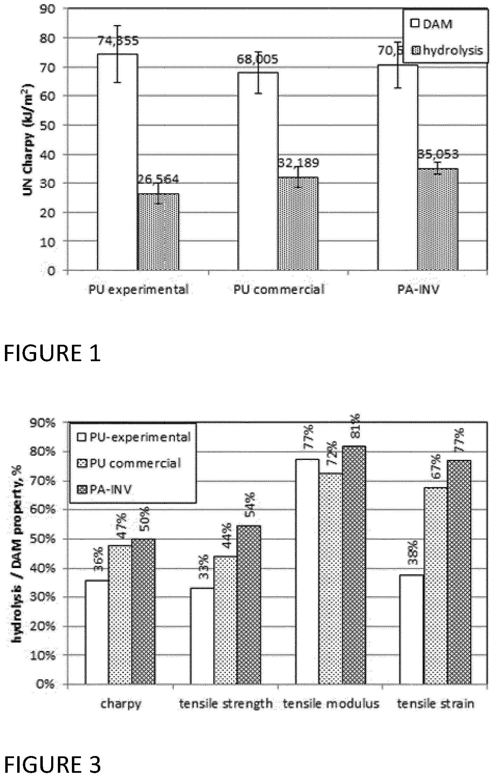

Figure 1 illustrates the results of un-notched Charpy tests according to ISO 179-2/Eu of 50 wt.% chopped glass fibres (GF) reinforced polyphthalamide (PPA XE3722NK Nat from EMS-CHEMIE AG (CH)) measured on samples dry as moulded (DAM) (white columns) and after exposure to hydrolysis conditions, immerged in 50/50 water / havoline from Texaco at 135°C during 1000 h (shaded columns). The prior art samples were reinforced with glass fibres coated with two different sizing compositions: samples "PU-experimental" comprise 0.06 wt.% A1100 aminosilane and 0.54 wt.% of a polyurethane film former (PU406 from Bayer) specifically indicated for use with polyamide matrices; samples "PU-commercial" are reinforced with commercial glass fibres comprising a sizing specifically indicated for use with polyamide matrices containing A1100 aminosilane, a PU film former and various additives selected to optimize the properties imparted by said sizing. The samples according to the invention (marked "PA-INV") were reinforced with the same glass fibres as used with samples PU-experimental, but coated with a sizing according to the present invention comprising 0.06 wt.% A1100 aminosilane, and 0.54 wt.% of a polyamide film former (PA845 from Michelman), No other additive was added to demonstrate the effect of the invention in its broadest scope. It is clear that the performance of the composites according to the present invention may still be enhanced by using additional additives as will be discussed more in details in continuation. It can be seen from Figures 1 &3 in combination, that the un-notched Charpy results measured after hydrolysis on PU-experimental composite samples dropped from 74 kJ / m² to 27 kJ / m², corresponding to a drop of 64% of the mechanical properties. PU-commercial composite samples started with a slightly lower DAM Charpy result than PU-experimental, but maintained 47% of its properties after hydrolysis, with a drop from 68 kJ / m² to 32 kJ / m², thus, as expected, behaving better than the PU-experimental composites. On the other hand, the composite samples according to the present invention yielded a mean UN-Charpy value measured DAM comparable within the error bars with the PU-experimental composites, with 71 kJ / m² measured DAM, but with a considerably higher value after hydrolysis of 35 kJ / m², corresponding to a drop in mechanical properties of 50% instead of 64% for PU-experimental and 53% for PU-commercial (cf. Figure 3 for the residual values after hydrolysis: compare white and shaded columns of the first pair labelled Charpy). Since the sizing used in the samples according to the present invention contains nothing more than an aminosilane and a PA film former, there is ample room for further optimizing these results and yielding higher mechanical properties after exposure to hydrolysis conditions.

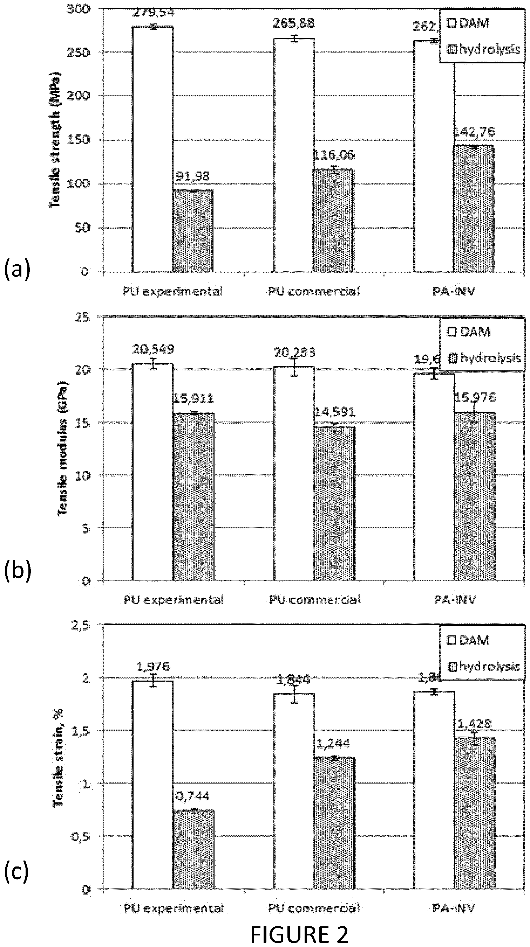

Dog bone samples of the same composite before (DAM) and after hydrolysis, were tested in tensile mode. The mechanical properties are illustrated in Figure 2, including (a) the tensile strength, (b) the tensile modulus, and (c) the tensile strain at rupture. It can be seen that the tensile properties measured dry as moulded (DAM) of the composites reinforced with glass fibres of the prior art (both PU-experimental and PU-commercial) are similar within experimental errors to those of the composites reinforced with glass fibres according to the present invention (with an unexpected high DAM tensile strength value for PU-experimental). After exposure to hydrolysis conditions, however, the composites reinforced with glass fibres according to the present invention retain substantially more of their DAM properties than the prior art composites. Figure 3 shows that the composites reinforced with the fibres of the present invention (dark shaded columns) and the prior art composites (white columns for PU-experimental, and light shaded columns for PU-commercial) retain, respectively, 54% vs 33% & 44% of their DAM tensile strength, 81% vs 77% & 72% of their DAM tensile modulus and 77% vs 38% & 67% of their DAM tensile strain at rupture. The enhancement of the resistance to hydrolysis of glass fibre reinforced composites yielded by the sizing of the present invention is not only unexpected, but quite amazing, in particular considering the absence of any additives compared with the PU-commercial glass fibres.

Since the glass fibres of the present invention are particularly suitable for reinforcing polyamides having melting temperature of the order of 200°C and higher for aliphatic polyamides (PA6, PA6.6, PA12, etc), and of the order of 300°C and higher for partly aromatic polyamides such as PPA, screw temperatures of the order of 300-400°C and higher are required for compounding glass fibre reinforced pellets and for injection moulding composite parts. For this reason, the dry sizing including the polyamide film former should have a weight loss at 350°C of not more than 10%, measured by TGA in nitrogen.

Enhanced resistance to hydrolysis requires as good a wetting of the glass fibres surface by the polymeric matrix melt as possible. It has been established experimentally that the best results were obtained for polyamide matrices, in particular PPA, with polyamide film former containing sizing compositions that developed an initial contact angle with ethylene glycol comprised between 20° and 70°, preferably 40° and 60°. Such ranges of the contact angle formed by ethylene glycol seem to correspond to the optimal surface energy of the sizing to yield good properties with polyamide matrices, such as PPA. The contact angle measured on the sizing can be varied by varying the type and amount of polyamide based film former. In particular, the weight ratio of said polyamide film former to the total weight of sizing without water is preferably comprised between 20 and 95 wt.%, more preferably, between 50 and 90 wt.%. The polyamide film former preferably has an intrinsic viscosity of at least 0.7 dl / g, preferably at least 1.0 dl / g.

The film former of the present sizing can be exclusively composed of a polyamide film former composition as was the case with the sizing used in the examples illustrated in Figures 1 to 3. Alternatively, the film former can be formed of at least 75 wt.% of polyamide, preferably at least 80 wt.%, more preferably at least 90 wt.% polyamide, and wherein the polyamide is preferably admixed with one or more of a:
- (i): Epoxy resin emulsion, preferably based on any of epoxy bisphenol A or epoxy bisphenol F,
- (ii): Epoxy ester resin,
- (iii): Epoxy urethane resin,
- (iv): Polyurethane,
- (v): (Meth-)acrylate polymer or co-polymer.

The choice of the type of film former to be used together with the polyamide based film former depends much on the type of matrix the glass fibres are to be used with. As derivable from the tests values plotted in Figures 1 to 3, excellent results are obtained with PPA as a matrix when the film former of the sizing comprises exclusively a polyamide based film former.

Any silane coupling agent preferably comprises monomeric or oligomeric (< 6 units) silanes such as aminosilanes or epoxy-silanes. Trialkoxysilanes are usually used as they permit to form a tri-dimensional network of Si-O-Si covalent bonds at the surface and around the surface of the glass fibres. Dialkoxysilanes, on the other hand, decrease the amount of inter-silane chains covalent bonds, and form a hair like structure at the surface of the glass fibres. Whilst a tri-dimensional silane network is generally recognized as improving resistance to hydrolysis of the fibre by the formation of a protective sheath around the fibres, it also tends to form fibre clusters by reaction between silanes of adjacent fibres, which a polymeric matrix melt cannot impregnate completely. The hair like structure obtained with dialkoxysilanes, on the other hand, do not form a protective sheath around the fibres, but facilitates impregnation of the fibre bundles and wetting of the individual fibres by a polymer melt. With a lower polarity than trialkoxysilane, dialkoxysilanes reduce the hydrophilicity of the surface of the glass fibres which is believed to contribute to an enhancement of the resistance to hydrolysis to a level comparable to trialkoxysilane based silanes. According to the present invention, trialkoxysilanes, dialkoxysilanes, and mixtures thereof can be used to form the silane coupling agent of the sizing, so that the crosslinking density around the glass fibres can be optimized at will. The silane based coupling agent should be present in an amount of 2 to 40 wt.% of total weight of sizing without water, preferably from 2 to 15 wt.%.

Examples of silanes which can be used alone or in combinations in the sizing of the present invention comprise:
- aminotrialkoxysilane, such as γ-aminopropyltriethoxysilane, γ-aminopropyltrimethoxysilane, N- β-(Aminoethyl)- γ-aminopropyltrimethoxysilane, N- β-(Aminoethyl)- γ-aminopropyltriethoxysilane, diethylenetriaminopropyltrimethoxysilane, Bis-(γ-trimethoxysilylpropyl) amine, N-phenyl- γ-aminopropyltrimethoxysilane, γ-amino-3,3-dimethylbutyltrimethoxysilane, γ-aminobutyltriethoxysilane, polyazamide silane,
- **aminodialkoxysilane**, such as γ-aminopropylmethyldiethoxysilane, N-β-(Aminoethyl)-γ-aminopropylmethyldimethoxysilane, N-β-(Aminoethyl)-y-aminopropyl-methyldimethoxysilane, N-β-(Aminoethyl)- γ-aminoisobutylmethyldimethoxy-silane, γ-aminopropylmethyldimethoxysilane, N-β-(Aminoethyl)- γ-aminopropyl-methyldiethoxysilane, and/or

- **Epoxy- trialkoxysilane**, such as β-(3,4-epoxycyclohexy)ethyltrimethoxysilane, γ-glycidoxypropyltrimethoxysilane, γ-glycidoxypropyltriethoxysilane, γ-glycidoxypropyltriethoxysilane, β-(3,4-epoxycyclohexyl)ethyltriethoxy-silane, β-(3,4-epoxycyclohexyl)ethyltrimethoxysilane,5,6-epoxyhexyl-triethoxysilane.

The sizing composition of the present invention may advantageously comprise one or more multifunctional reactive polymers, preferably selected from one or more of:
- Epoxy phenol novolac (EPN),
- Epoxy cresol novolac (ECN),
- (Co-)polymer comprising acrylic and/or methacrylic acid groups,
- Copolymer of maleic acid,
- (Co-)polymer grafted with maleic anhydride.
the multifunctional reactive polymer(s) being preferably present in an amount of 0 to 70 wt.% of the total weight of sizing without water more preferably from 20 wt.% to 40 wt.%. Such multifunctional reactive polymers are believed to create covalent bonds between the matrix and the sizing, thus increasing the fibre-matrix interfacial strength; The choice of an optimal reactive polymer therefore largely depends on the type of matrix used.

The sizing composition of the present inventions may comprise a number of additives, such as any of the following taken alone or in any combiation:
- pH adjusters, such as bases, preferably ammonia or sodium hydroxide, or acids, preferably acetic acid or phosphoric acid,
- a non-ionic lubricant, preferably a fatty alcohols ethoxylated or fatty acid monoester of polyethylene glycol, such as PEG 200 Monolaurate, PEG 600 Monooleate, PEG 600 Monostearate, PEG 400 Monostearate PEG 400 Monooleate, PEG 600 Monolaurate, the non-ionic lubricant being preferably present in an amount of 0 to 30 wt.% solids, more preferably from 2 to 25 wt.% solids, most preferably from 10 to 15 wt.% solids;
- a cationic lubricant, such as a polyethyleneimine polyamide salt, and is preferably present in the size composition in an amount from 0 to 30 wt.% solids, more preferably from 2 to 25 wt.% solids, most preferably from 10 to 15 wt.% solids,
- an antistatic agent, such as a quaternary ammonium, a tetraethylammonium chloride, or lithium chloride, and is preferably present in an amount of 0 to 5 wt.% solids, preferably from 0.5 to 1.5 wt.% solids.
- anti-foaming agents, such as polysiloxane derivatives, the anti-foaming agent being preferably present in amount of less than 0.1% of total weight of sizing without water,
- an isocyanate based cross-linker, such as an isocyanurate, biuret, carbodiimide, the isocyanate based cross-linker being preferably present in amount of 0 to 50% of total weight of sizing without water;
- a boron-containing compound selected from the group consisting of boric acid, boron oxide, sodium tetraborate, potassium metaborate, potassium tetraborate, ammonium biborate, ammonium tetrafluoroborate, butylammonium tetrafluoroborate, calcium tetrafluoroborate, lithium fluoroborate, potassium tetrafluoroborate, sodium tetrafluoroborate, tetrabutylammonium tetrafluoroborate, tetraethylammonium tetrafluoroborate and zinc tetrafluoroborate; boron containing compounds are believed to catalyse the reaction between silanol groups of the silane coupling agent with the surface of the glass fibres;
- a hypophosphite containing compound such as a hypophosphite salt or phosphite containing compound such as: sodium hypophosphite, ammonium hypophosphite, calcium hypophosphites, trisnonylphenyl phosphite.

The sizing composition can be applied to the surface of glass fibres as they are formed out of a bushing as an aqueous composition. It can be applied at a single coating station, generally by a roller contacting the fibres, or at two separate coating stations, a first coating station, quite similar to the single roller coating station discussed above, applying a precursor, and a second station, applying a binder, usually by spraying. Two component sizing compositions are usually applied to chopped glass fibres, the binder being added after chopping. Two component sizing compositions comprising a precursor and a binder are usually used to separate components which are reactive with each other. The coated fibres are dried to evaporate the water and to let the sizing composition react with the surface of the glass fibres.

Glass fibres coated with a sizing according to the present invention are advantageously used to reinforce polymeric matrix composites, in particular polyamide matrices, more particularly partly aromatic polyamides, such as PPA, which can replace metals in more and more applications exposed to heat and moisture. Continuous fibres may be impregnated with a polymeric matrix by techniques well known to the person skilled in the art, such as filament winding or calendaring for forming prepregs. In many applications, continuous glass fibres are transformed into a fabric, such a weave, a knit, a braid, or the like, before being impregnated with a polymer by any conventional technique known by the persons skilled in the art. Chopped fibres are compounded with a matrix in the screw of an extruder to form composite pellets, which can be melted and injection moulded to form parts of any shape.

In view of their DAM properties consistent with existing glass fibre composites, and their enhanced properties after exposure to hydrolysis conditions, glass fibre reinforced composites according to the present invention can advantageously be used to form one of:
- Under the hood parts in an automotive vehicle,
- Semi-structural and structural parts in an automotive vehicle,
- Parts of equipment to be used in contact with food and water.
- Electric and electronic parts such as connectors, LED connections, ...
- Parts to be used in sports, leisure and appliances,
- Engineering parts such as gears and bearings

## Claims

1. An aqueous sizing composition for glass fibres comprising:
(a) A silane based coupling agent,
(b) one or more film formers,
**Characterized in that**, said one or more film formers comprise a polyamide based film former.

2. Sizing composition according to the preceding claim, wherein the dry sizing including polyamide film former has a weight loss at 350°C of not more than 10%, measured by TGA in nitrogen.

3. Sizing composition according to claim 1 or 2, wherein the dry sizing film including polyamide film former develop an initial contact angle with ethylene glycol comprised between 20° and 70°, preferably 40° and 60°.

4. Sizing composition according to any of the preceding claims, wherein the weight ratio of said polyamide film former to the total weight of sizing without water is comprised between 20 and 95 wt.%, preferably, between 50 and 90 wt.%.

5. Sizing composition according to any of the preceding claims, wherein the film former is exclusively composed of polyamide or, alternatively, the film former is formed of at least 75 wt.% of polyamide, preferably at least 80 wt.%, more preferably at least 90 wt.% polyamide, and wherein the polyamide is preferably admixed with one or more of a:
(i) Epoxy resin emulsion, preferably based on any of epoxy bisphenol A or epoxy bisphenol F,
(ii) Epoxy ester resin,
(iii) Epoxy urethane resin,
(iv) Polyurethane,
(v) (Meth-)acrylate polymer or co-polymer.

6. Sizing composition according to claim 1 or 2, wherein the silane based coupling agent is present in amount of 2 to 40 wt.% of total weight of sizing without water, preferably from 2 to 15 wt.%, and preferably comprises one or a mixture of a:
• **aminotrialkoxysilane**, such as γ-aminopropyltriethoxysilane, γ-aminopropyltrimethoxysilane, N- β-(Aminoethyl)- γ-aminopropyltrimethoxysilane, N- β-(Aminoethyl)- γ-aminopropyltriethoxysilane, diethylenetriaminopropyltrimethoxysilane, Bis-(γ-trimethoxysilylpropyl) amine, N-phenyl- γ-aminopropyltrimethoxysilane, γ-amino-3,3-dimethylbutyltrimethoxysilane, γ-aminobutyltriethoxysilane, polyazamide silane,
• **aminodialkoxysilane**, such as γ-aminopropylmethyldiethoxysilane, N-β-(Aminoethyl)-γ-aminopropylmethyldimethoxysilane, N-β-(Aminoethyl)-γ-aminopropyl-methyldimethoxysilane, N-β-(Aminoethyl)- γ-aminoisobutylmethyldimethoxy-silane, γ-aminopropylmethyldimethoxysilane, N-β-(Aminoethyl)- γ-aminopropyl-methyldiethoxysilane, and/or
• **Epoxy- trialkoxysilane**, such as β-(3,4-epoxycyclohexy)ethyltrimethoxysilane, γ-glycidoxypropyltrimethoxysilane, γ-glycidoxypropyltriethoxysilane, γ-glycidoxypropyltriethoxysilane, β-(3,4-epoxycyclohexyl)ethyltriethoxy-silane, β-(3,4-epoxycyclohexyl)ethyltrimethoxysilane,5,6-epoxyhexyl-triethoxysilane.

7. Sizing composition according to any of the preceding claims, further comprising additives preferably selected from one or more of:
• pH adjusters, such as bases, preferably ammonia or sodium hydroxide, or acids, preferably acetic acid or phosphoric acid,
• a non-ionic lubricant, preferably a fatty alcohols ethoxylated or fatty acid monoester of polyethylene glycol, such as PEG 200 Monolaurate, PEG 600 Monooleate, PEG 600 Monostearate, PEG 400 Monostearate PEG 400 Monooleate, PEG 600 Monolaurate, the non-ionic lubricant being preferably present in an amount of 0 to 30 wt.% solids, more preferably from 2 to 25 wt.% solids, most preferably from 10 to 15 wt.% solids;
• a cationic lubricant, such as a polyethyleneimine polyamide salt, and is preferably present in the size composition in an amount from 0 to 30 wt.% solids, more preferably from 2 to 25 wt.% solids, most preferably from 10 to 15 wt.% solids,
• an antistatic agent, such as a quaternary ammonium, a tetraethylammonium chloride, or lithium chloride, and is preferably present in an amount of 0 to 5 wt.% solids, preferably from 0.5 to 1.5 wt.% solids.
• anti-foaming agents, such as polysiloxane derivatives, the anti-foaming agent being preferably present in amount of less than 0.1% of total weight of sizing without water,
• an isocyanate based cross-linker, such as an isocyanurate, biuret, carbodiimide, the isocyanate based cross-linker being preferably present in amount of 0 to 50% of total weight of sizing without water;
• a boron-containing compound selected from the group consisting of boric acid, boron oxide, sodium tetraborate, potassium metaborate, potassium tetraborate, ammonium biborate, ammonium tetrafluoroborate, butylammonium tetrafluoroborate, calcium tetrafluoroborate, lithium fluoroborate, potassium tetrafluoroborate, sodium tetrafluoroborate, tetrabutylammonium tetrafluoroborate, tetraethylammonium tetrafluoroborate and zinc tetrafluoroborate;
• a hypophosphite containing compound such as a hypophosphite salt or phosphite containing compound such as: sodium hypophosphite, ammonium hypophosphite, calcium hypophosphites, trisnonylphenyl phosphite.

8. Sizing composition according to any of the preceding claims, further comprising one or more multifunctional reactive polymers, preferably selected from one or more of:
- Epoxy phenol novolac (EPN),
- Epoxy cresol novolac (ECN),
- (Co-)polymer comprising acrylic and/or methacrylic acid groups,
- Copolymer of maleic acid,
- (Co-)polymer grafted with maleic anhydride.
the multifunctional reactive polymer(s) being preferably present in an amount of 0 to 70 wt.% of the total weight of sizing without water more preferably from 20 wt.% to 40 wt.%

9. Glass fibre at least partially coated with a sizing according to any of the preceding claims, with covalent bonds formed between the surface of the glass fibre and some of the silane coupling agent, and wherein most of the water has been removed.

10. Glass fibre composite **characterized in that** it comprises glass fibres according to the preceding claim.

11. Glass fibre composite according to the preceding claim, wherein the matrix is a polyamide, such as PA6, PA4.6, PA6.6, PA6.1 0, PA6.12, PA10, PA12, PPA, more preferably a partly aromatic polyamide, most preferably a polyphthalamide (PPA).

12. Glass fibre composite according to claim 9 or 10, in the form of a pellet comprising chopped glass fibres, suitable for being extruded or injection moulded or, alternatively the glass fibres are long or continuous.

13. Use of a glass fibre-polymer composite according to any of claims 9 to 12 to form one of:
• Under the hood parts in an automotive vehicle,
• Semi-structural and structural parts in an automotive vehicle,
• Parts of equipment to be used in contact with food and water.
• Electric and electronic parts such as connectors, LED connections, ...
• Parts to be used in sports, leisure and appliances,
• Engineering parts such as gears and bearings.

14. Use of a polyamide as film former in a sizing composition for enhancing the mechanical properties measured dry as moulded (DAM) or measured after ageing at high temperature and/or after ageing in moist conditions.

15. Process for producing a glass fibre according to claim 8 comprising the following steps:
• Drawing a bundle of glass fibres out of a bushing,
• Applying a sizing composition according to any of claims 1 to 7 to the surface of said fibres, and
• Applying a thermal treatment to the thus coated fibres for reacting the sizing composition with the surface of the glass fibres.

16. Process according to the preceding claim, wherein the sizing composition is applied in a single application station, preferably comprising a roller or, alternatively, some components of the sizing compositions are applied in a first application step with a roller, and a the remaining components are applied in a second application step by spraying after chopping the fibres.
